Europäisches Patentamt

European Patent Office

Office européen des brevets

(19)

(11) Numéro de publication: **0 296 062 B1**

(12) **FASCICULE DE BREVET EUROPEEN**

(45) Date de publication du fascicule du brevet: **06.06.90**

(51) Int. Cl.5: **F16F 13/00**

(21) Numéro de dépôt: **88401486.1**

(22) Date de dépôt: **15.06.88**

(54) Perfectionnements apportés aux manchons de support antivibratoires hydrauliques.

(30) Priorité: **19.06.87 FR 8708615**

(43) Date de publication de la demande:
**21.12.88 Bulletin 88/51**

(45) Mention de la délivrance du brevet:
**06.06.90 Bulletin 90/23**

(84) Etats contractants désignés:
**BE DE ES GB IT SE**

(56) Documents cités:
**EP-A- 0 009 120**
**FR-A- 2 214 070**
**FR-A- 2 593 255**

**PATENT ABSTRACTS OF JAPAN,**
**vol. 10, no. 21 (M-449)[2078], 28 jan-**
**vier 1986, page 80 M 449; & JP-A-60 179 540 (NISSAN**
**JIDOSHA K.K.) 13-09-1985**
**PATENT ABSTRACTS OF JAPAN,**
**vol. 11, no. 135 (M-585)[2582], 28 av-**
**ril 1987, page 33 M 585; & JP-A-61 274 131 (TOKAI**
**RUBBER IND. LTD) 04-12-1986**
**PATENT ABSTRACTS OF JAPAN,**
**vol. 6, no. 26 (M-112)[904], 16 fév-**
**rier 1982, page 67 M 112; &**
**JP-A-56 143 830 (BRIDGESTONE TIRE K.K.) 09-11-1981**

(73) Titulaire: **HUTCHINSON, 2 rue Balzac, F-75008 Paris(FR)**

(72) Inventeur: **Jouade, Pierre 21 Rue du Mont Barry, La**
**Fringale La Chapelle du Noyer, F-28200 Chateaudun(FR)**

(74) Mandataire: **Behaghel, Pierre et al, CABINET**
**PLASSERAUD 84 rue d'Amsterdam, F-75009 Paris(FR)**

(56) Documents cités: (suite)
**PATENT ABSTRACTS OF JAPAN,**
**vol. 9, no. 231 (M-414)[1954], 18 septem-**
**bre 1985, page 85 M 414; & JP-A-60 88 242 (TOYOTA**
**JIDOSHA K.K.) 18-05-1985**
**PATENT ABSTRACTS OF JAPAN,**
**vol. 10, no. 115 (M-474)[2172], 30 av-**
**ril 1986, page 115 M 474; & JP-A-60 245 849 (TOUKAI**
**GOMU KOGYO K.K.) 05-12-1985**

ACTORUM AG

## Description

L'invention est relative aux manchons de support antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère adhéré sur celles-ci et conformé de façon à former avec ces dernières au moins deux poches étanches diamétralement opposées selon une direction Y et communiquant entre elles par un canal étroit, l'ensemble desdites poches et dudit canal étant rempli d un liquide amortisseur.

De tels manchons sont destinés à être montés entre deux pièces rigides solidarisables respectivement avec les deux armatures et susceptibles de subir l'une par rapport à l'autre des oscillations orientées selon la direction Y, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne plus particulièrement, parmi les manchons de support ci-dessus, ceux dans lesquels les poches se présentent sous la forme d'alvéoles évidés axialement dans au moins un anneau massif constitutif du corps en élastomère, alvéoles présentant une épaisseur radiale relativement petite de façon à pouvoir être quasiment fermés par écrasement radial.

Dans les modes de réalisation connus de ces manchons, voir par exemple le document JP-A 6 088 242, les alvéoles débouchent axialement sur une même face terminale de l'anneau et le canal étroit qui les réunit s'étend selon un arc de cercle admettant comme axe l'axe X du manchon et est en général délimité par ladite face et par une rondelle appliquée axialement contre cette face, l'une au moins des deux portées ainsi appliquées l'une contre l'autre étant évidée par une gorge circulaire ou semi-circulaire pour former ledit canal.

Ces réalisations présentent certains inconvénients et, en particulier, les suivants :
- si la rondelle est constituée en élastomère, la pression qui chasse le liquide amortisseur de l'une des poches vers l'autre à travers le canal étroit risque de déformer cette rondelle, ce qui peut détruire l'étanchéité de la paroi délimitant ce canal ou tout au moins modifier les caractéristiques dimensionnelles dudit canal, caractéristiques auxquelles est liée la valeur de la fréquence de travail affectée au support amortisseur,
- si la rondelle est rigide, notamment métallique, l'amplitude maximum des déformations susceptibles d'être subies par le support est limitée.

L'invention a pour but, surtout, de supprimer ces inconvénients.

A cet effet, les supports amortisseurs selon l'invention sont essentiellement caractérisés en ce que leurs poches débouchent respectivement dans deux chambres annulaires ou semi-annulaires distinctes évidées dans le corps en élastomère et en ce que ces deux chambres sont réunies exclusivement entre elles par le canal étroit ci-dessus mentionné, ledit canal étant ici orienté axialement ou tout au moins selon une direction présentant une composante axiale.

Dans des modes de réalisation avantageux, on a recours en outre à l'une et/ou à l'autre des dispositions suivantes :
- les deux poches sont évidées axialement selon deux sens opposés dans un même anneau central et chacune des deux chambres annulaires ou semi-annulaires dans lesquelles ces deux poches débouchent respectivement est délimitée axialement par ledit anneau central et par un anneau terminal,
- les deux poches sont évidées axialement selon deux sens opposés dans deux anneaux distincts et les deux chambres annulaires ou semi-annulaires dans lesquelles ces deux poches débouchent respectivement sont séparées axialement l'une de l'autre par un troisième anneau central,
- le canal étroit s'étend le long de l'armature tubulaire externe,
- le canal étroit s étend le long de l'armature tubulaire interne.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

Les figures 1 et 2, de ce dessin, montrent respectivement en coupe transversale selon I-I, figure 2 et en coupe axiale selon II-II, figure 1, un manchon de support établi selon l'invention.

La figure 3 montre selon une demi-coupe axiale une variante d'un tel manchon.

La figure 4 montre en coupe axiale une autre variante d'un tel manchon.

D'une façon connue en soi, le manchon de support comprend dans chaque cas :
- une armature métallique interne tubulaire de révolution 1 d'axe X,
- une armature métallique externe tubulaire de révolution 2 coaxiale à l'armature 1 au moins pour l'état monté et chargé du manchon et entourant cette armature 1,
- et un corps en élastomère 3 reliant l'une à l'autre les deux armatures 1 et 2 en ménageant entre celles-ci deux poches étanches A,B diamétralement opposées selon une direction Y.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Les deux poches A et B communiquent entre elles par un canal étroit E sur lequel on reviendra plus loin.

Ces deux poches et le canal étroit sont remplis d'un liquide L.

D'une façon également connue en soi, les deux poches A et B sont constituées par des alvéoles évidés axialement dans au moins un anneau massif constitutif du corps 3 en élastomère.

Mais ici ces deux poches débouchent axialement dans deux chambres annulaires ou semi-annulaires distinctes C et D d'axe X et de section axiale relativement grande, et ce sont ces deux chambres qui sont réunies entre elles par le canal étroit E.

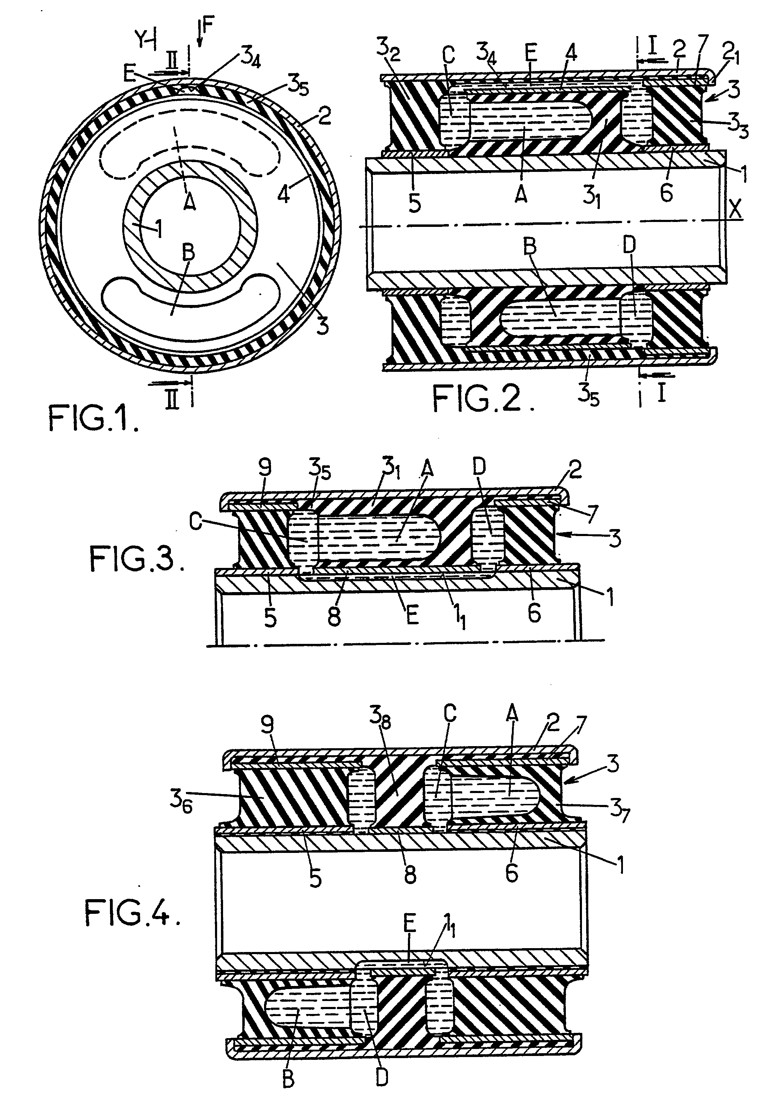

Dans le mode de réalisation illustré sur les figures 1 et 2, les deux poches A et B sont évidées dans un anneau central unique désigné par la référence $3_1$.

Les sens axiaux selon lesquels ces deux poches sont évidées sont alors opposés et les deux chambres C et D bordent axialement l'anneau $3_1$ le long de respectivement ses deux faces terminales, ces deux chambres étant complétées par deux anneaux terminaux en élastomère $3_2$ et $3_3$ qui sont interposés jointivement, comme l'anneau $3_1$, entre les deux armatures tubulaires 1 et 2, mais à leurs deux extrémités axiales.

Le canal étroit E s'étend ici axialement.

Il est délimité :
- extérieurement, par une rainure $3_4$ évidée dans une chemise cylindrique en élastomère $3_5$ venue de moulage avec l'anneau $3_2$ et tapissant intérieurement l'armature tubulaire externe 2,
- et intérieurement par une douille cylindrique 4 dont les faces externe et interne sont appliquées intimement contre respectivement la chemise $3_5$ et l'anneau $3_1$.

Le canal étroit E qui relie entre elles les deux chambres C et D pourrait également présenter une forme autre que rectiligne et axiale, par exemple hélicoïdale ou analogue, tout en étant encore délimitée par la douille 4 et la chemise $3_5$.

On voit encore sur la figure 2 :
- que l'anneau $3_2$ est adhéré intérieurement contre une bague cylindrique 5,
- et que deux autres bagues cylindriques 6 et 7 sont prévues pour délimiter intérieurement et extérieurement l'anneau $3_3$.

Comme on le comprend facilement, les différents anneaux, bagues et douille définis ci-dessus sont emmanchés dans l'ordre convenable autour de l'armature tubulaire interne 1 et l'ensemble est ensuite maintenu en place d'une part par sertissage d'une extrémité de l'armature tubulaire externe 2 rabattue vers l'intérieur en $2_1$ sur la bague 7 et d'autre part par au moins un point de soudure judicieusement localisé entre l'une au moins des bagues 5 et 6 et l'armature tubulaire interne 1.

Le fonctionnement d'un tel support est le suivant.

Au repos, le support se trouve dans son état illustré sur les figures 1 et 2.

Si, à partir de cette situation, on applique sur l'armature externe 2, par rapport à l'armature intérieure 1, une sollicitation selon la direction Y dans le sens de la flèche F, la poche A se rétrécit par écrasement alors qu'au contraire la poche B se dilate et que les volumes globaux des deux chambres C et D demeurent sensiblement constants : le liquide 2 initialement contenu dans la poche A est alors chassé vers la poche B à travers le canal étroit E.

Cet effet est inversé dès que la sollicitation en sens inverse de la précédente est exercée sur le support.

L'alternance de ces sollicitations est généralement renouvelée à une certaine fréquence et, pour une valeur F de cette fréquence qui est prédéterminée et liée aux dimensions du canal étroit E, et en particulier au rapport entre sa section droite et sa longueur, la masse de liquide circulant dans ce canal est mise en résonance et le support exerce alors sur la transmission des oscillations de l'une des armatures à l'autre un excellent amortissement.

Le support illustré sur la figure 3 diffère du précédent en ce que le canal étroit E, encore rectiligne et orienté axialement, s'étend le long de l'armature interne 1 au lieu de s'étendre le long de l'armature externe 2 : il est ici délimité intérieurement par une rainure $1_1$ évidée dans la face externe de l'armature 1 et extérieurement par une douille cylindrique 8 interposée jointivement entre cette armature 1 et la face interne de l'anneau central $3_1$.

Ici la douille 4 de la précédente réalisation est supprimée, la chemise $3_5$ qui tapisse intérieurement l'armature externe 2 est venue de moulage avec l'anneau central $3_1$, et une bague cylindrique externe 9 délimite extérieurement l'anneau $3_2$ et est emmanchée à force dans l'extrémité correspondante de ladite chemise $3_5$.

Dans le support illustré sur la figure 4, les deux poches A et B sont évidées axialement dans deux anneaux distincts $3_6$ et $3_7$ reliant entre elles les deux armatures 1 et 2 et elles débouchent toutes les deux vers le centre du manchon, dans les chambres annulaires C et D qui sont ici séparées axialement l'une de l'autre par un troisième anneau $3_8$ s'étendant selon le plan axial médian du manchon et reliant entre elles également les deux armatures 1 et 2.

Les bagues et douilles métalliques sont ici réparties intérieurement et extérieurement comme sur les trois anneaux de la figure 3, la chemise $3_5$ qui tapisse intérieurement l'armature 2 étant venue de moulage avec l'anneau central $3_8$ et le canal étroit E longeant extérieurement l'armature interne 1.

En suite de quoi et quel que soit le mode de réalisation adopté, on dispose d'un support amortisseur hydraulique dont la constitution et le fonctionnement résultent suffisamment de ce qui précède.

Ce support présente de nombreux avantages par rapport à ceux antérieurement connus et en particulier les suivants :
- ses deux poches A et B demeurent séparées l'une de 1 autre de manière étanche au cours du fonctionnement du support et pendant toute la vie de celui-ci, à la seule réserve près qu'elles communiquent entre elles à travers le canal étroit E, lequel est ménagé dans une portion centrale du support, portion qui demeure à l'abri des déformations accentuées et des risques de séparation entre pièces distinctes,
- les déformations radiales du support sont possibles jusqu'à écrasement total de chaque poche A ou B, écrasement qui définit une butée progressive et efficace de fin de course,
- l'encombrement transversal du support peut être très faible, son diamètre extérieur pouvant descendre à 35 mm ou même moins,
- la fabrication dudit support est facile et économique.

## Revendications

1. Manchon de support antivibratoire hydraulique comprenant deux armatures rigides tubulaires (1,2) s'entourant mutuellement et réunies entre elles par un corps en élastomère (3) adhéré sur elles et conformé de façon à former avec elles au moins deux poches étanches (A,B) diamétralement opposées et communiquant entre elles par un canal étroit (E), l'ensemble desdites poches et dudit canal étant rempli d un liquide amortisseur (L), les poches se présentant sous la forme d'alvéoles évidés axialement dans au moins un anneau massif constitutif du corps en élastomère, alvéoles présentant une épaisseur radiale relativement petite de façon à pouvoir être quasiment fermés par écrasement radial, caractérisé en ce que les poches (A,B) débouchent respectivement dans deux chambres annulaires ou semi-annulaires distinctes (C,D) évidées dans le corps en élastomère et en ce que ces deux chambres sont réunies exclusivement entre elles par le canal étroit ci-dessus (E), ledit canal étant orienté axialement ou tout au moins selon une direction présentant une composante axiale.

2. Manchon selon la revendication 1, caractérisé en ce que les deux poches (A,B) sont évidées axialement selon deux sens opposés dans un même anneau central (3₁) et en ce que chacune des deux chambres annulaires ou semi-annulaires (C,D) dans lesquelles ces deux poches débouchent respectivement est délimitée axialement par ledit anneau central (3₁) et par un anneau terminal (3₂, 3₃).

3. Manchon selon la revendication 1, caractérisé en ce que les deux poches (A,B) sont évidées axialement selon deux sens opposés dans deux anneaux distincts (3₆, 3₇) et en ce que les deux chambres annulaires ou semi-annulaires (C,D) dans lesquelles ces deux poches débouchent respectivement sont séparées axialement l'une de l'autre par un troisième anneau (3₈) central.

4. Manchon selon l'une quelconque des précédentes revendications, caractérisé en ce que le canal étroit (E) s'étend le long de l'armature tubulaire externe (2).

5. Manchon selon l'une quelconque des revendications 1 à 3, caractérisé en ce que le canal étroit (E) s'étend le long de l'armature tubulaire interne (1).

## Claims

1. A hydraulic antivibratory support sleeve comprising two rigid tubular frames (1,2) one surrounding the other and joined together by an elastomer body (3) adhered thereto and shaped so as to form therewith at least two diametrically opposite sealed pockets (A, B), communicating together through a narrow channel (E), the assembly formed by said pockets and said narrow channel being filled with a damping liquid (L), the pockets being in the form of cavities formed axially in at least one solid annulus forming the elastomer body, which cavities have a relatively small radial thickness so as to be substantially closed by radial crushing, characterized in that the pockets (A, B) open respectively into two separate annular or semi-annular chambers (C, D) formed in the elastomer body and in that these two chambers are joined together exclusively by the above narrow channel (E), said channel being oriented axially or at least in a direction having an axial component.

2. Sleeve according to claim 1, characterized in that the two pockets (A, B) are formed axially in two opposite directions in the same central annulus (3₁) and in that each of the two annular or semi-annular chambers (C, D) into which these two pockets open respectively is defined axially by said central annulus (3₁) and by an end annulus (3₂, 3₃).

3. Sleeve according to claim 1, characterized in that the two pockets (A, B) are formed axially in two opposite directions in two separate annuli (3₆, 3₇) and in that the two annular or semi-annular chambers (C, D) into which the two pockets open respectively are separated axially from each other by a third central annulus (3₈).

4. Sleeve according to any one of the preceding claims, characterized in that the narrow channel (E) extends along the external tubular frame (2).

5. Sleeve according to any one of the preceding claims, characterized in that the narrow channel (E) extends along the internal tubular frame (1).

## Patentansprüche

1. Hydraulisches, schwingungsdämpfendes Hülsenlager bestehend aus zwei starren rohrförmigen Werkstücken (1, 2), von denen das eine das andere umgibt und die untereinander mittels eines Körpers (3) aus elastomerem Material verbunden sind, der an den Werkstücken durch eine Klebverbindung oder dergleichen befestigt und so ausgebildet ist, daß er mit diesen wenigstens zwei dichte sich diametral gegenüberliegende Taschen (A, B) bildet, die untereinander über einen engen Kanal (E) verbunden sind, wobei die Taschen und der Kanal mit einer Dämpfungsflüssigkeit (L) gefüllt sind und die beiden Taschen aus Hohlräumen bestehen, die in axialer Richtung in wenigstens einem massiven Ring ausgebildet sind, der von dem Körper aus elastomerem Material gebildet wird und die Hohlräume eine verhältnismäßig geringe Ausdehnung in radialer Richtung haben, so daß sie durch radiales Zusammendrücken sozusagen geschlossen werden, dadurch gekennzeichnet, daß die Taschen (A, B) jeweils in eine von zwei ringförmigen oder halbringförmigen, voneinander getrennte Kammern (C, D) münden, die in dem Körper aus elastomerem Material ausgenommen sind und daß die beiden Kammern ausschließlich durch den engen Kanal (E) miteinander in Verbindung stehen, der in axialer oder mehr oder weniger in einer Richtung verläuft, die eine axiale Komponente hat.

2. Hülsenlager nach Anspruch 1, dadurch gekennzeichnet, daß die beiden Taschen axial in zwei entgegengesetzten Richtungen in demselben mittleren Ring ($3_1$) ausgebildet sind und daß jede der beiden ringförmigen oder halbringförmigen Kammern (C, D), in die jeweils eine der beiden Taschen mündet, in axialer Richtung durch den mittleren Ring ($3_1$) und einen Endring ($3_2$, $3_3$) begrenzt wird.

3. Hülsenlager nach Anspruch 1, dadurch gekennzeichnet, daß die beiden Taschen (A, B) axial in zwei entgegengesetzten Richtungen in zwei voneinander getrennten Ringen ($3_6$, $3_7$) ausgebildet sind und daß die beiden ringförmigen oder halbringförmigen Kammern (C, D), in die jeweils eine der beiden Taschen mündet, in axialer Richtung voneinander durch einen dritten mittleren Ring ($3_8$) voneinander getrennt sind.

4. Hülsenlager nach einem der vorhergehenden Ansprüche, dadurch gekennzeichnet, daß sich der enge Kanal (E) entlang dem äußeren rohrförmigen Werkstück (2) erstreckt.

5. Hülsenlager nach einem der Ansprüche 1 bis 3, dadurch gekennzeichnet, daß sich der enge Kanal (E) längs des innenliegenden rohrförmigen Werkstücks (1) erstreckt.

EP 0 296 062 B1

FIG.1.

FIG.2.

FIG.3.

FIG.4.